# EUROPEAN PATENT APPLICATION

(11) **EP 2 251 570 A2**
(43) Date of publication of application: **17.11.2010**
(21) Application number: 10004721.6
(22) Date of filing: 04.05.2010
(51) Int. Cl.: F16J 12/00

(54) **Releasing pressurized fluid from a vessel**

(30) Priority: 05.05.2009 US 435472
(71) Applicant: Eaton Corporation, Cleveland, Ohio 44114-2584 (US)
(72) Inventor: Williams, Ryan John, Jackson, New Jersy 08527 (US); Jacobs, Richard Bradley, Ocean, New Jersey 07712 (US); Taubenslag, David Jay, Monmoth Junction New Jersey 08852 (US)
(74) Representative: Carstens, Dirk Wilhelm

(57) **Abstract**

A cover (30) is provided for a removable pressure vessel lid (22) and the cover has a peripheral flange (32) extending over the interface of the lid and pressure vessel to direct escaping pressurized fluid away from the operator upon release of the lid fasteners. In another version, the peripheral flange is provided on the lid.

## Description

### BACKGROUND

The present disclosure relates to controlling release of pressurized fluid from a vessel of the type having an open end with a closure removable for open access to the contents of the vessel. In particular, the disclosure relates to the type of pressures vessel employed for filtering fluid through filter elements disposed within the pressure vessel and which require periodic removal for cleaning or replacement. The vessel usually contains an inlet and outlet connected in line in a fluid system for passing fluid under pressure through the filter elements contained within the vessel. Such pressure vessels commonly employ a header or closure plate disposed over an open end of the pressure vessel and secured thereto by fasteners such as bolts or toggle clamps and sealed over the end of the pressure vessel by a seal such as an O-ring.

When it has been desired to open the closure plate or cover of the pressure vessel for interior access, it has been necessary for the operator to carefully loosen the fasteners securing the lid to the closure in order that the residual pressure in the vessel is not released at an accelerated rate in order to prevent injury to the operator by the rapidly escaping pressurized fluid which may include particulate matter from the filters. The more common arrangement of the cover for the filter closure is a flat plate secured to a flange formed about the open end of the pressure vessel with a gasket or seal ring interposed therebetween. Thus, loosening of the fasteners can provide a blast of pressurized fluid escaping between the flange and the undersurface of the cover plate as the fasteners are released thereby creating a hazardous condition for the operator upon initiating loosening of the fasteners.

Thus, it has been desired to provide a way or means of reducing the hazard of escaping fluid under high pressure from a pressure vessel upon depressurizing by removal of the vessel closure or lid.

### BRIEF DESCRIPTION

The present disclosure provides a solution to the problem of prevention hazardous escape of fluid under high pressure from a pressure vessel during operation in the event of seal failure and upon the operator loosening of the fasteners of the vessel closure for removal thereof for access to the interior of the pressure vessel.

In one version, the pressure vessel closure or lid has a cover secured thereover with a flange extending peripherally thereabout and at generally right angles to the cover for directing fluid escaping between the cover and the pressure vessel in a direction generally parallel to the walls of the pressure vessel and thus in a direction away from the operator as the fasteners retaining the lid are released.

In another version, the cover has a peripheral flange provided thereon which extends generally at right angles to the lid and over the juncture of the-lid and pressure vessel flange for directing fluid escaping therebetween in a direction away from the user or operator. If desired, the peripheral flange may be formed integrally as a one-piece member with the closure or lid.

### BRIEF DESCRIPTION OF THE DRAWINGS

FIGURE 1 is a cross-section of one version of a pressure vessel having a lid with a protective cover for directing pressurized fluid away from the user upon release from the pressure vessel;

FIGURE 2 is a detailed plan and side elevation view of the closure member of FIGURE 1; and,

FIGURE 3 is a portion of a cross-section similar to FIGURE 1 displaying another version of the pressure vessel closure with a protective flange for pressure release.

### DETAILED DESCRIPTION

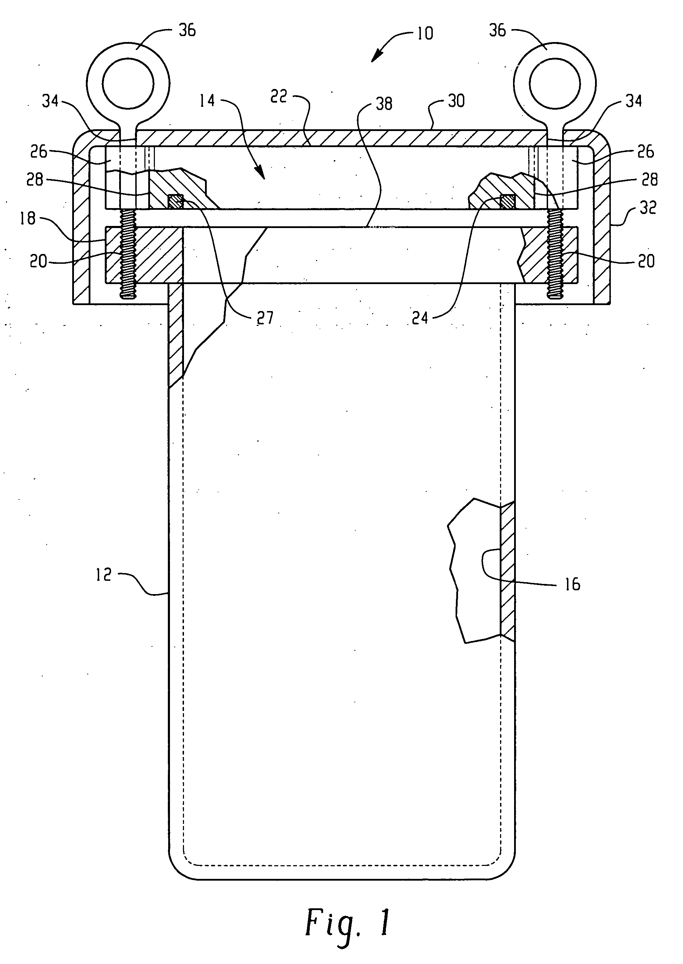

Referring to FIGURE 1, one version of a pressure vessel assembly is indicated generally at 10 and includes a vessel 12 having an open end indicated generally at 14 with a pressure resistant wall 16 formed of suitable material for containing the intended contents and withstanding the service pressures to which the vessel will be subjected. A collar or rim flange 18 is provided about the open end of the pressure vessel and may be secured thereto in a convenient expedient as for example weldment; and, alternatively the flange may be formed integrally with the pressure vessel wall 16 thereby providing a one-piece open ended pressure vessel.

The flange 18 has a plurality of threaded bores 20 formed therethrough and disposed in peripherally spaced arrangement for receiving therein suitable retaining members such as threaded fasteners; however, alternatively suitable clamps such as unshown toggle clamps could be employed.

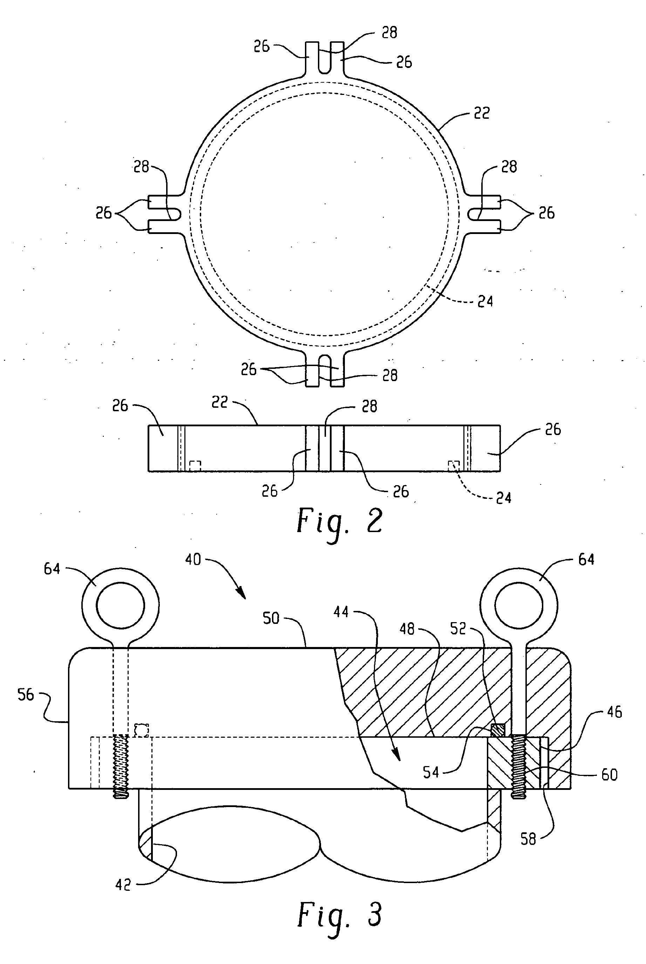

Referring to FIGURES 1 and 2, a closure member or lid 22 is shown disposed over the open end 14 of the pressure vessel 12; and, in FIGURE 1, the lid 22 is shown positioned spaced from the surface of the flange 18 for permitting release of pressurized fluid within the vessel. The lid 22 may include a peripheral groove 24 into which is received an annular seal ring 27 which may comprise a resilient O-ring. It will be understood however that alternatively, a gasket (not shown) of suitable material may be employed rather than an O-ring seal. The cover 22 includes a plurality of outwardly extending lugs 26 disposed in pairs with each pair forming a slot 28 therebetween with the pairs spaced about the periphery at such that each of the slots 28 is located coincident with one of the threaded bores 20 formed in the pressure vessel flange 18.

Referring to FIGURE 1, a cover 30 is disposed over the closure or lid 22; and, the cover includes peripheral flange 32 thereon which extends generally at right angles to the cover 30 and extends over the flange 18 of the pressure vessel and provides an annular or radial space thereabout. The cover has a plurality of apertures 34 formed therethrough which are located to coincide with the slots 28 of the cover member 22. Each of the apertures 34 has received therethrough a suitable threaded fastener such as eye bolts 36 which are threadingly engaged in the threaded bores 20 for securing the lid or closure member 22 against the face 36 of the flange 18 and causing the seal ring 27 to seal against the face 36. Thus, upon the user loosening the fasteners 36 and permitting the lid 22 to move to the illustrated position slightly spaced from the face 36 of the flange 18, fluid pressure escaping between the lid and the face 36 is deflected downwardly with respect to the illustration in FIGURE 1 and away from the user. It will be understood that other methods of retaining and securing the cover may be employed such as releasable clamps. In the present practice, the cover 30 has the flange 32 formed integrally therewith as a one-piece member; however, it would be understood that the flange may be formed separately and secured to the cover by any suitable expedient as, for example, weldment.

Referring to FIGURE 3, another version of the system for controlling pressure relief in a pressure vessel is indicated generally at 40 and includes a wall 42 for containing fluid under pressure and an open end indicated generally at 44 with a sealing flange or collar 46 and forming a sealing face 48. It will be understood that the flange or collar 46 may be attached to the pressure vessel wall 42 at its open end by any suitable expedient such as, for example, weldment; or, alternatively, the flange 46 may be formed integrally with the pressure vessel wall as a one piece member. In the version 40, a closure or lid 50 is disposed over the sealing surface 48 and sealed thereon by a suitable sealing expedient as, for example, a resilient sealing ring such as O-ring 52 which is received in a groove 54 formed in the undersurface of the closure or lid 50. The lid 50 has an annular flange 56 provided thereon which has its inner periphery 58 configured to provide an annular space about the outer periphery of the flange 46 or, in other words, to provide a radial gap therebetween.

Flange 46 has a plurality of threaded bores 60 provided therethrough disposed in peripherally spaced arrangement thereabout. The lid 50 has complimentary bores 62 formed therethrough which are located on the lid so that each is aligned to coincide with one of the threaded bores 60. The suitable threaded fasteners such as eye bolts 64 are received through the bores 62 and threadingly engage the threaded bores 60 for retaining the lid 50 in contact with the sealing surface 48 and causing the seal rings 52, 54 to seal the pressure vessel to prevent escape of pressurized fluid therefrom.

When it is desired to depressurize the pressure vessel or release the pressurized fluid therefrom, the fasteners 64 are loosened by the operator and the seal between the seal rings 52 and the sealing surface 48 is broken permitting pressurized fluid to escape into the radial gap between the flange 56 and the flange 46 and to flow in a direction away from the operator.

The present disclosure thus describes a system for depressurizing a pressure vessel wherein the cover flange is provided about the sealing surface of the lid and the open end of the pressure vessel so that upon the operator loosening the fasteners containing the lid, the pressurized fluid is directed away from the user.

Obviously, modifications and alterations will occur to others upon reading and understanding the preceding detailed description. It is intended that the exemplary embodiments be construed as including all such modifications and alterations insofar as they come within the scope of the appended claims or the equivalents thereof.

## Claims

1. A method of protecting a user during release of pressurized fluid from a vessel of the type having an access opening (14) with a removable closure (22) therein comprising:
(a) sealing (27) between the closure (22) and the access opening (14);
(b) providing user releasable retaining apparatus (36) for securing the closure over the access opening; and,
(c) forming an exclusive flow passage upon user release of the retaining apparatus and directing escaping pressurized fluid in a direction (32, 58) away from the user.

2. The method defined in claim 1, wherein the step of forming an exclusive flow passage includes forming a peripheral flange on the closure.

3. The method defined in claim 2, wherein the step of forming a peripheral flange (58) includes forming an annular flange.

4. The method defined in claim 1, wherein the step of forming an exclusive flow passage includes forming an annular channel (58) between the closure and the vessel.

5. The method defined in claim 1, wherein the step of providing user releasable retaining apparatus includes providing a plurality of threaded fasteners (20, 36).

6. The method defined in claim 1, wherein the step of sealing includes disposing a resilient seal (27) between the closure and access opening.

7. A pressure vessel of the type having an access opening (14) and a removable closure (22) thereover comprising:
(a) wall structure (16) defining a fluid pressure chamber having an access opening (14);
(b) a closure (22) disposed over the access opening;
(c) means operable for sealing (27) the closure over the access opening;
(d) means operable for releasably retaining (36) the closure over the access opening; and,
(e) means operable, upon user release of the retaining means for directing flow of pressurized fluid (32, 58) in a direction away from the user.

8. The pressure vessel defined in claim 7, wherein the means for directing flow comprises a channel (58, 18) formed in one of the wall structure and the closure.

9. The vessel defined in claim 7, wherein the means for directing flow includes a channel formed in the wall structure (46, 58) and the closure.

10. The vessel defined in claim 7, wherein the means for directing flow includes a peripheral channel (18, 58) about the access opening.

11. The vessel defined in claim 10, wherein the channel has an annular configuration.

12. The vessel defined in claim 7, wherein the means operable for sealing comprises an annular seal (27).

13. The vessel defined in claim 12, wherein the annular seal comprises an O-ring (27).

14. The vessel defined in claim 7, wherein the means operable for releasable retaining includes threaded fasteners (36).
